# EUROPÄISCHE PATENTSCHRIFT

(11) **EP 1 737 647 B1**
(45) Veröffentlichungstag und Bekanntmachung des Hinweises auf die Patenterteilung: **14.11.2007**
(21) Anmeldenummer: 05716698.5
(22) Anmeldetag: 15.02.2005
(51) Int. Cl.: B29D 30/24, B29D 30/36

(54) **VERFAHREN ZUR HERSTELLUNG EINES LUFTREIFENS**
METHOD FOR PRODUCING A PNEUMATIC TIRE
PROCEDE DE PRODUCTION D'UN PNEU

(30) Priorität: 05.04.2004 DE 102004016659
(43) Veröffentlichungstag der Anmeldung: 03.01.2007
(73) Patentinhaber: Continental Aktiengesellschaft, 30165 Hannover (DE)
(72) Erfinder: SERGEL, Horst, 30657 Hannover (DE); SEEVERS, Jörn, 31303 Burgdorf (DE); WINKLER, Jens, 30900 Wedemark (DE); DOERING, Werner, 30823 Garbsen (DE)
(74) Vertreter: Finger, Karsten
(86) Internationale Anmeldenummer: PCT/EP2005/050650
(87) Internationale Veröffentlichungsnummer: WO 2005/097478

(56) Entgegenhaltungen:
- EP-A- 1 295 704
- WO-A-03/095185
- DE-A1- 4 416 514
- US-A1- 2003 056 880

## Beschreibung

Die Erfindung betrifft ein Verfahren zur Herstellung eines Luftreifens.

Die konventionelle Herstellung von Luftreifen erfolgt auf Reifenaufbautrommeln, bei denen einzelne Reifenbauteile in Form von unvulkanisierten Gummistreifen nacheinander auf eine Reifenbautrommel aufgewickelt werden. Die Reifenaufbauteile werden über Transport- und Fördervorrichtungen der Reifenaufbautrommel zugeführt, die das Reifenaufbauteil in einer bestimmten Position auf die Reifenaufbautrommel auflegen. Es sind sogenannte Einstufen- und Zweistufen-Verfahren bekannt. In der DE 44 16 514 ist beispielsweise ein Reifenaufbau-Verfahren gezeigt, bei der die Reifenkarkasse bzw. Reifeneinlage mit Innendruck in das Laufstreifenpaket bombiert wird. In einer Vulkanisationspresse wird abschließend mit einem Heizbalg die Endkontur des herzustellenden Reifens erzeugt, wobei eine sogenannte Resterhebung des Reifens in der Heizform erfolgt. Da die Erhebung der Reifenbauteile über den Reifenquerschnitt nicht konstant ist, kann dies zu Unstetigkeiten in der Materialverteilung und -spannung im Reifen führen, wodurch insbesondere die Fertigungs- und Gebrauchseigenschaften der herzustellenden Reifen beeinträchtigt wird.

Der Erfindung liegt die Aufgabe zugrunde, ein Verfahren zur Herstellung eines Luftreifens bereitzustellen, welches die Fertigungsgenauigkeit des Luftreifens steigert.

Gelöst wird die Aufgabe durch ein Verfahren zur Herstellung eines Luftreifens, mit folgenden Schritten:
- Auflegen von Reifenbauteilen auf eine Reifenaufbautrommel bestehend aus Unterstützungssegmenten, Zwischensegmenten und einem Grundkörper in einer ersten Auflegesequenz,
- Setzen von Wulstkernen mit einer Kernsetzvorrichtung
- Einfallen der Zwischensegmente durch eine Durchmesserverkleinerung
- Zusammenfahren der Unterstützungssegmente in axialer Richtung der Reifenaufbautrommel und Expandieren des Grundkörpers in radialer Richtung der Reifenaufbautrommel
- Auflegen von weiteren Reifenbauteilen in einer zweiten Auflegesequenz
- Zurückfahren des Grundkörpers und der Unterstützungssegmente in eine Ausgangsposition der Reifenaufbautrommel und
- Entnahme des Reifenrohlings von der Reifenaufbautrommel.

Vorteilhafte Weiterbildungen der Erfindung sind Gegenstand der abhängigen Ansprüche.

Ein Vorteil der Erfindung ist insbesondere darin zu sehen, dass durch das erfindungsgemäße Verfahren eine Verringerung der Bauteilverschiebung durch eine Minimierung der Erhebung und konstante Erhebung über den Reifenquerschnitt erreicht wird. Diese Wirkung wird u. a. dadurch erzielt, dass die Auflegegeometrie und Bauteilgeometrie im vulkanisierten Reifen weitgehend übereinstimmen, wodurch insgesamt Reifen mit einer sehr hohen Fertigungsgenauigkeit erzielt werden. Ferner sind sogenannte stumpfe Splice möglich, da keine Bombierung mit Innendruck erfolgt. Des Weiteren ist eine Integration von komplexen Bauteilen über eine Materialdirektverarbeitung sowie das Spulen von Einzelcorden möglich. Durch die Materialdirektverarbeitung, z. B. in Form eines Multi-Compound-Tread, entfällt ebenfalls der Aufwand für eine Materialvorverarbeitung.

In einer vorteilhaften Weiterbildung der Erfindung ist vorgesehen, dass der Grundkörper aus einem festen Material besteht. Auf diese Weise wird u.a. die Auflegegenauigkeit und Bauteilverschiebung in der Heizpresse minimiert.

In einer weiteren vorteilhaften Weiterbildung der Erfindung ist vorgesehen, dass der Grundkörper die Kontur des herzustellenden Reifen aufweist. Dadurch erhält der herzustellende Reifen direkt die Endkontur für die Vulkanisation.

In einer weiteren vorteilhaften Weiterbildung der Erfindung ist vorgesehen, dass Zusammenfahren der Unterstützungssegmente und das Expandieren des Grundkörpers zeitsynchron erfolgen. Das zeitsynchrone Verfahren bietet den Vorteil, dass keine unnötigen Materialdehnungen der Reifenbauteile erfolgen.

In einer weiteren vorteilhaften Weiterbildung der Erfindung ist vorgesehen, dass das die Unterstützungssegmente nach dem Zusammenfahren die eingefallenen Zwischensegmente überdecken. Auf diese Weise ist eine kompakte Bauweise der Reifenaufbautrommel möglich.

In einer weiteren vorteilhaften Weiterbildung der Erfindung ist vorgesehen, dass das Auflegen des Laufstreifens nach der zweiten Auflegesequenz in Form einer Lagenaufspulung erfolgt. Die Lagenaufspulung ermöglicht insbesondere einen sogenannten Multi-Compound-Tread.

In einer weiteren vorteilhaften Weiterbildung der Erfindung ist vorgesehen, dass für jedes Reifenbauteil ein separater Servicer eingesetzt wird. Die separaten Servicer haben den Vorteil, dass dadurch die Produktivität der Reifenaufbautrommel gesteigert werden kann.

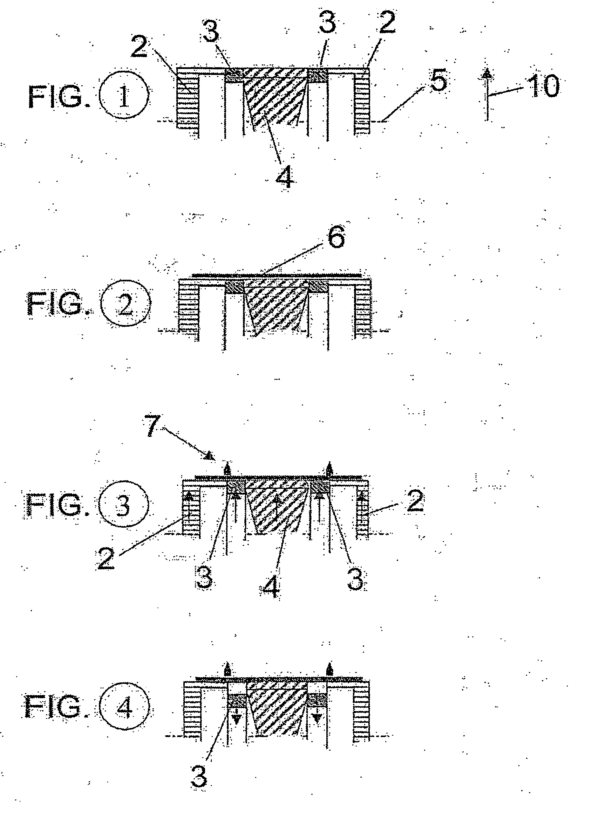

Anhand eines Ausführungsbeispiels soll die Erfindung näher erläutert werden. Die Figuren 1 - 9 zeigen die aufeinanderfolgenden Verfahrensschritte des erfindungsgemäßen Verfahrens.

Die Figur 1 zeigt die Reifenaufbautrommel 1 im Ausgangszustand, die sich aus den Unterstützungssegmenten 2, den Zwischensegmenten 3 und dem Grundkörper 4 zusammensetzt. Die Bauteile der Reifenaufbautrommel 1 sind rotationssymmetrisch zur axialen Achse 5. Die Unterstützungssegmente 2 und Zwischensegmente 3 sind ferner achsensymmetrisch zur Mitte des Grundkörpers 4 aufgebaut, wie durch die unterschiedliche Schraffur der Bauteile angedeutet ist Bei diesem Verfahrensschritt sind die Unterstützungssegmente 2 und der Grundkörper 4 eingefallen sowie das Zwischensegment 3 teilexpandiert. Der Pfeil 10 zeigt die radiale Richtung der Reifenaufbautrommel 1.

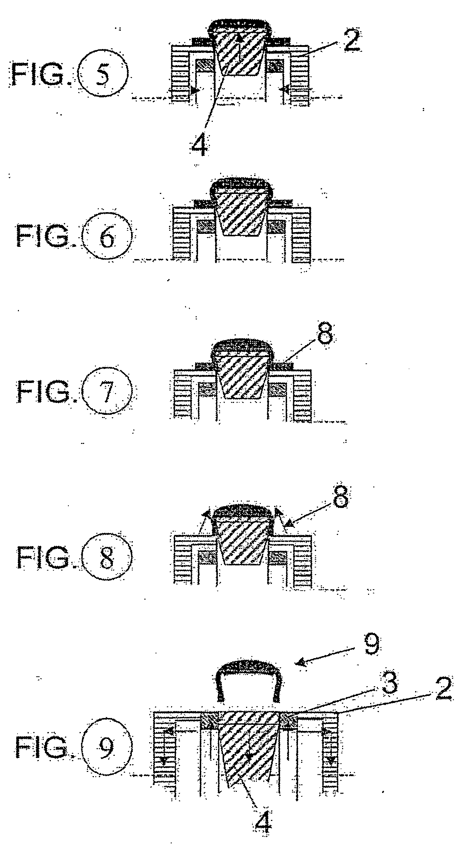

Die Figur 2 zeigt den zweiten Verfahrensschritt mit der ersten Auflagesequenz der Reifenaufbauteile 6. Bei diesem Verfahrensschritt werden nacheinander das Wulstprofil, die Seitenwand, der Wulstverstärker, die Innenschicht, und eine oder mehrere Einlagen aufgelegt.

Die Figur 3 zeigt das Setzen der Wulstkerne 7. Bei diesem Verfahrensschritt werden die Unterstützungssegmente 2 und die Zwischensegmente 3 expandiert sowie der Grundkörper teilexpandiert. Das Setzen der Wulstkerne 7 erfolgt mit einer Kernsetzvorrichtung. Das Kernprofil wird vorzugsweise mit einem 0°-Wulstverstärker versehen.

Die Figur 4 zeigt den Verfahrensschritt, bei dem die Zwischensegmente 3 in radialer Richtung einfallen.

Die Figur 5 zeigt den Verfahrensschritt der Wulstbildung, bei der die Unterstützungssegmente 2 symmetrisch zusammenfahren und gleichzeitig der Grundkörper 4 expandiert. Da der Grundkörper 4 aus einem festen Material besteht und die Außenkontur des herzustellenden Reifens aufweist, erhalten die Reifenbauteile eine entsprechende Innenkontur.

Die Figur 6 zeigt die Verfahrensschritte der zweiten Auflegesequenz. Bei diesem Verfahrensschritt werden der Gürtel und die Bandage über ein Roll-on and cut-Verfahren oder eine Lagenaufspulung aufgelegt. Denkbar ist ebenfalls erst zum jetzigem Zeitpunkt den herzustellenden Reifen mit einem Wulstverstärker und einem Kernprofil zu versehen.

Die Figur 7 zeigt den Verfahrensschritt des Auflegens des Laufstreifens, welches wiederum über eine Lagenaufspulung erfolgen kann.

Die Figur 8 zeigt den Lagenhochschlag der Seitenwände, der entweder mechanisch mit sogenannten Krempelrollen erfolgt oder mit Seitenbombierbälgen und sogenannten Pushern.

Die Figur 9 zeigt den letzten Verfahrensschritt der Rohlingsentnahme, bei der die Bauteile der Reifenaufbautrommel in den Ausgangszustand zurückgefahren werden. Zunächst verfahren die Unterstützungssegmente 2 axial auseinander. Anschließend fallen der Grundkörper 4 die Unterstützungssegmente 2 ein, wobei der Reifenrohling 9 freigegeben wird. Danach erfolgt schließlich die Entnahme des Reifenrohlings 9.

### Bezugszeichenliste

### (ist Teil der Beschreibung)

- 1: Reifenaufbautrommel
- 2: Unterstützungssegmente
- 3: Zwischensegmente
- 4: Grundkörper
- 5: axiale Achse der Reifenautbautrommel
- 6: Reifenbauteile der ersten Auflegesequenz
- 7: Wulstkerne
- 8: Seitenwand
- 9: Reifenrohling
- 10: radiale Richtung der Reifenautbautrommel

## Patentansprüche

1. Verfahren zur Herstellung eines Luftreifens, mit folgenden Schritten:
- Auflegen von Reifenbauteilen auf eine Reifenaufbautrommel (1) bestehend aus Unterstützungssegmenten (2), Zwischensegmenten (3) und einem Grundkörper (4) in einer ersten Auflegesequenz,
- Setzen von Wulstkernen (7) mit einer Kernsetzvorrichtung
- Einfallen der Zwischensegmente (3) durch eine Durchmesserverkleinerung
- Zusammenfahren der Unterstützungssegmente (2) in axialer Richtung der Reifenaufbautrommel (1) und Expandieren des Grundkörpers (4) in radialer Richtung derReifenaufbautrommel (1)
- Auflegen von weiteren Reifenbauteilen in einer zweiten Auflegesequenz
- Zurückfahren des Grundkörpers (4) und der Unterstützungssegmente (2) in eine Ausgangsposition der Reifenaufbautrommel (1) und
- Entnahme des Reifenrohlings (9) von der Reifenautbautrommel.

2. Verfahren nach Anspruch 1,
**dadurch gekennzeichnet, dass**
der Grundkörper (4) aus einem festen Material besteht.

3. Verfahren nach Anspruch 1 oder 2,
**dadurch gekennzeichnet, dass**
der Grundkörper (4) die Kontur des herzustellenden Reifen aufweist.

4. Verfahren nach einem der Ansprüche 1 bis 3,
**dadurch gekennzeichnet, dass**
das Zusammenfahren der Unterstützungssegmente (2)und das Expandieren des Grundkörpers (4) zeitsynchron erfolgen.

5. Verfahren nach einem der Ansprüche 1 bis 4,
**dadurch gekennzeichnet, dass**
die Unterstützungssegmente (2) nach dem Zusammenfahren die eingefallenen Zwischensegmente (3) überdecken.

6. Verfahren nach einem der Ansprüche 1 bis 5,
**dadurch gekennzeichnet, dass**
das Auflegen des Laufstreifens nach der zweiten Auflegesequenz in Form einer Lagenaufspulung erfolgt.

7. Verfahren nach einem der Ansprüche 1 bis 6,
**dadurch gekennzeichnet, dass**
für jedes Reifenbauteil ein separater Servicer eingesetzt wird.

8. Verfahren nach einem der Ansprüche 1 bis 7,
**dadurch gekennzeichnet, dass**
die Reifenaufbautrommel (1) in Form einer wandernden Trommel an den einzelnen Servicern entlang verfahren wird.

## Claims

1. Method for producing a pneumatic tyre, comprising the following steps:
- placing tyre components on a tyre building drum (1), comprising supporting segments (2), intermediate segments (3) and a base (4), in a first placing sequence,
- setting bead cores (7) with a core setting device,
- collapsing the intermediate segments (3) by reducing the diameter,
- bringing the supporting segments (2) together in the axial direction of the tyre building drum (1) and expanding the base (4) in the radial direction of the tyre building drum (1),
- placing further tyre components on in a second placing sequence,
- returning the base (4) and the supporting segments (2) to a starting position of the tyre building drum (1) and
- removing the green tyre (9) from the tyre building drum.

2. Method according to Claim 1, **characterized in that** the base (4) consists of a solid material.

3. Method according to Claim 1 or 2, **characterized in that** the base (4) has the contour of the tyre to be produced.

4. Method according to one of Claims 1 to 3, **characterized in that** the bringing together of the supporting segments (2) and the expanding of the base (4) are performed at synchronized times.

5. Method according to one of Claims 1 to 4, **characterized in that**, after they are brought together, the supporting segments (2) cover the collapsed intermediate segments (3).

6. Method according to one of Claims 1 to 5, **characterized in that** the placing on of the tread rubber in accordance with the second placing sequence is performed in the form of ply winding.

7. Method according to one of Claims 1 to 6, **characterized in that** a separate servicer is used for each tyre component.

8. Method according to one of Claims 1 to 7, **characterized in that** the tyre building drum (1) is moved along the individual servicers in the form of a travelling drum.

## Revendications

1. Procédé de fabrication d'un bandage pneumatique, qui présente les étapes suivantes :
- dans une première séquence de pose, pose des composants du bandage sur un tambour (1) de montage de bandage constitué de segments (2) de soutien, de segments intermédiaires (3) et d'un corps de base (4),
- placement d'âmes de bourrelet (7) à l'aide d'un dispositif de placement d'âmes,
- rétraction des segments intermédiaires (3) par diminution de leur diamètre,
- rassemblement des segments de soutien (2) dans la direction axiale du tambour (1) de montage de bandage et dilatation du corps de base (4) dans la direction radiale du tambour (1) de montage de bandage,
- pose d'autres composants du bandage dans une deuxième séquence de pose,
- retrait du corps de base (4) et des segments de soutien (2) dans une position initiale du tambour (1) de montage de bandage et
- enlèvement de l'ébauche (9) de bandage du tambour de montage de bandage.

2. Procédé selon la revendication 1, **caractérisé en ce que** le corps de base (4) est constitué d'un matériau solide.

3. Procédé selon les revendications 1 ou 2,
**caractérisé en ce que** le corps de base (4) présente le contour du bandage à fabriquer.

4. Procédé selon l'une des revendications 1 à 3, **caractérisé en ce que** le rassemblement des segments de soutien (2) et l'expansion du corps de base (4) s'effectuent de manière synchronisée.

5. Procédé selon l'une des revendications 1 à 4, **caractérisé en ce que** les segments de soutien (2) recouvrent les segments intermédiaires (3) rétractés après leur rassemblement.

6. Procédé selon l'une des revendications 1 à 5, **caractérisé en ce que** la pose de la bande de roulement après la deuxième séquence de pose s'effectue par enroulement de couches.

7. Procédé selon l'une des revendications 1 à 6, **caractérisé en ce qu'**un poste d'alimentation séparé est utilisé pour chaque composant du bandage.

8. Procédé selon l'une des revendications 1 à 7, **caractérisé en ce que** le tambour (1) de montage de bandage qui présente la forme d'un tambour mobile est déplacé le long des différents postes d'alimentation.
